# EUROPÄISCHE PATENTSCHRIFT

(11) **EP 2 107 266 B1**
(45) Veröffentlichungstag und Bekanntmachung des Hinweises auf die Patenterteilung: **31.08.2011**
(21) Anmeldenummer: 08006702.8
(22) Anmeldetag: 01.04.2008
(51) Int. Cl.: F16D 65/12

(54) **Bremsscheibe und Scheibenbremse**
Brake disk and disk brake
Disque de frein et frein à disque

(43) Veröffentlichungstag der Anmeldung: 07.10.2009
(73) Patentinhaber: Lucas Automotive GmbH, 56070 Koblenz (DE)
(72) Erfinder: Seuser, Ulrich, Dr., 56566 Neuwied (DE); Rychlik, Michael, 56477 Rennerod (DE); Seyhun, Serdar, 50389 Wesseling (DE); Korte, Jürgen, 56379 Holzappel (DE)
(74) Vertreter: von Hellfeld, Axel

(56) Entgegenhaltungen:
- WO-A-2004/102029
- DE-A1-102004 056 645
- US-A- 5 460 249
- US-A1- 2005 269 173

## Beschreibung

Die Erfindung betrifft eine Bremsscheibe für eine Scheibenbremse mit einem Außenreibpfad auf einer Seite und einem Innenreibpfad auf der anderen Seite der Bremsscheibe und mit luftdurchströmten Ausnehmungen zwischen den Reibpfaden zur Kühlung der Bremsscheibe sowie eine Scheibenbremse, in welcher eine solche Bremsscheibe eingesetzt wird, bei der es sich also um sogenannte belüftete Bremsscheibe handelt.

Solche Bremsscheiben sind aus der DE 10 2007 010 487 A1 bekannt.

Physikalisch bedeutet der Bremsvorgang bei einem Kraftfahrzeug, dass dessen kinetische Energie im Wesentlichen in Wärme umgewandelt wird. Diese Wärme wird in der Bremse erzeugt und muss noch während des Bremsvorganges größtenteils daraus in die Umgebung abgeführt werden. Bei einer Totalbremsung aus höheren Geschwindigkeiten kann es zu Wärmeleistungen von 500 kW kommen. Wird ein Fahrzeug über längere Zeit abgebremst, zum Beispiel bei Abfahrt von einem Gebirgspass, dann liegen dabei typischerweise auftretende Wärmeleistungen im Bereich von 5 kW.

Die Umwandlung der kinetischen Fahrzeugenergie in Wärme erfolgt an den Reibflächen der Bremse. Bei einer Scheibenbremse sind dies die Reibflächen zwischen den Bremsbelägen und der Bremsscheibe.

Von der Bremsscheibe wird Wärme durch Strahlung, Konvektion und durch Wärmeleitung abgeführt. Gleichwohl kommt es zu einer erheblichen Erhitzung der Bremsscheibe bei stärkeren und/oder längeren Bremsvorgängen. Die Erhitzung der Bremsscheibe erfolgt in aller Regel nicht homogen über die gesamte Bremsscheibe. Vielmehr treten Temperaturgradienten auf und es kann zu Verformungen der Bremsscheibe kommen, insbesondere zu dem bekannten sogenannten Schirmeffekt, d.h. einer Aufwölbung der Bremsscheibe. Solche Verformungen sind höchst unerwünscht. Insbesondere können sie zu dem sogenannten "Bremsenrubbeln" führen.

Ein weiteres, bei Scheibenbremsen immer wieder zu lösendes Problem ist das sogenannte Bremsenquietschen, welches u.a. auch dadurch entstehen kann, dass verschiedene Schwingungseffekte in der Bremse in Wechselwirkung (Koppelung) treten können. So gibt es Koppelungen der beiden mechanischen Untersysteme "Bremssattel" und "Bremsscheibe" insbesondere dann, wenn deren Resonanzfrequenzen nahe beieinander liegen. Dann kann es bei bestimmten Bremskräften zu einer resonanten Koppelung und damit höchst unerwünschten Quietschgeräuschen kommen.

In der eingangs genannten DE 10 2007 010 487 A1 wird versucht, den genannten Problemen dadurch zu begegnen, dass an einem radial inneren Rand der Reibscheibe (Bremsscheibe) ein Kompensationsring angeordnet wird. Hierdurch sollen die Eigenfrequenzen und insbesondere die axialen Biegemoden zu höheren Frequenzen hin verschoben werden, sodass eine Schwingungskoppelung mit anderen Subsystemen der Bremse erschwert wird. Auch sollen radiale Kräfte, die durch thermische Ausdehnungen auf die Bremsscheibe wirken, im Bereich des Kompensationsrings abgefangen und so eine Schirmung der Bremsscheibe vermieden werden.

Aus der US 2,629,464 ist eine belüftete Bremsscheibe bekannt, bei der die Anbindung des Scheibentopfes an den Scheibenkranz im Querschnitt reduziert ist und eine Krümmung, einen sogenannten Schwanenhals, aufweist. Der Schwanenhals erstreckt sich in axialer Richtung (bezogen auf die Drehachse der Scheibe) bis unter den Scheibenkranz. Hierdurch soll die Anbindung zwischen Scheibentopf und Scheibenkranz an das Ausdehnen und an das Zusammenziehen des Scheibenkranzes aufgrund thermischer Effekte angepasst werden, ohne dass der Werkstoff überbeansprucht wird, um also insbesondere Rissbildungen zu vermeiden.

Aus der US 2,800,982 ist eine belüftete Bremsscheibe bekannt, bei der zwischen sich radial erstreckenden stärkeren Rippen dünnere Rippen angeordnet sind. Die stärkeren Rippen bilden die tragende Verbindung zwischen Innenreibpfad und Außenreibpfad, während die dünneren Rippen hauptsächlich durch Oberflächenvergrößerung dem Abführen von Wärme dienen. Gemäß einer Ausführungsform sind die dünneren Rippen radial außen und radial innen mit V-förmigen Aussparungen versehen. Dadurch soll mehr Wärme aus dem mittleren Bereich der Reibpfade abgeführt werden und dies soll dann insgesamt dazu führen, dass die Temperatur in dem Reibkranz möglichst homogen bleibt, um thermische Gradienten und damit thermische Spannungen zu mindern.

Aus der FR 1,309,093 ist eine massive Bremsscheibe bekannt, bei der die Anbindung des Bremsscheibentopfes etwa mittig in Bezug auf die beiden Reibpfade erfolgt. Um der Schirmung zu begegnen, wird eine Nut in den Bereich der Anbindung derart eingestochen, dass der Innenreibpfad und der Außenreibpfad etwa dieselbe radiale Breite haben. Durch Abstimmung der Maße der Nut soll die Wärmeableitung von den Reibpfaden in den Scheibentopf so gesteuert werden, dass eine Minderung der Schirmung erreicht wird.

Die DE 1 283 611 zeigt eine belüftete Bremsscheibe, bei der derjenige Reibpfad, der unmittelbar in die Anbindung an den Bremsscheibentopf übergeht und aus dem somit durch Wärmeleitung mehr Wärme abgeführt wird als aus dem anderen Reibpfad, eine geringere Wandstärke aufweist als der andere Reibpfad. Hierdurch soll eine homogenere Temperaturverteilung erreicht werden; sodass Spannungen und Risse im Bereich der Reibpfade vermieden werden.

Die DE 1 950 178 zeigt eine belüftete Bremsscheibe, bei welcher der Reibpfad, der unmittelbar in die Anbindung an den Bremsscheibentopf übergeht eine größere Wandstärke hat als der andere Reibpfad. Hierdurch sollen Wärmespannungsrisse erst nach sehr langer Laufzeit und sehr außergewöhnlichen Beanspruchungen auftreten können. Dies wird dort damit begründet, dass die verstärkte Wandung des Reibpfades, die sich im Betriebszustand in der Radschüssel befindet und aus der die beim Bremsen erhitzte Luft nur unvollständig abgeführt werden kann, besser den hohen spezifischen Wärmebelastungen standhalten kann und für eine gleichmäßigere Wärmeverteilung im Scheibenkörper sorgt. Um ein starkes Verziehen der Bremsscheibe zu vermeiden, ist dort auch im Bereich der Anbindung des Außenreibpfades an den Bremsscheibentopf ein Einstich vorgesehen.

Die DE 2 128 594 zeigt eine Vollbelag-Scheibenbremse mit einer massiven, also nicht belüfteten Bremsscheibe, bei der die Anbindung des Bremsscheibentopfes etwa mittig in Bezug auf die beiden Reibpfade erfolgt (mittig ist als in axialer Richtung zwischen den Reibpfaden zu verstehen). Zwischen den beiden Reibpfaden ist eine tiefe V-förmige Nut eingestochen; sodass bei Betätigen der Bremse die Reibpfade zueinanderfedern. Die Reibpfade verlaufen im nicht betätigten Zustand der Bremse nicht planparallel zueinander, sondern doppelkegelförmig, derart, dass ihre Breite am Außendurchmesser um das Maß der Federung größer ist als an ihrem Innendurchmesser. Hierdurch soll eine vollflächige Berührung der Reibflächen der Bremsbeläge und der Reibpfade erreicht werden, um eine gleichmäßige Verteilung der Anpresskraft und damit auch der Reibkräfte und der Erhitzung zu erreichen. Die gleichmäßige thermische Belastung soll auch zu einem gleichmäßigen Verschleiß der Bremsbeläge führen. Um auf der Seite der Anbindung an den Topf den Wärmefluss zu reduzieren, ist die Anbindung durch eine Vielzahl von Öffnungen unterbrochen und die Wandstärke reduziert.

Auch die US 3,892,297 und die GB 2 001 716 befassen sich mit dem Problem der Vermeidung thermischer Gradienten in der Bremsscheibe und sehen hierzu unterschiedliche Wandstärken für die Reibpfade vor.

Die DE 3 026 354 beschreibt eine belüftete Bremsscheibe mit thermischen Ausgleichsmassen im Bereich der Lüftungskanäle. Der dort mit dem Scheibentopf unmittelbar verbundene Außenreibpfad wird derart vergrößert, dass die Masse des Außenreibpfades einschließlich der genannten thermischen Ausgleichsmasse etwa der Masse entspricht, die sich aus der Summe der Massen von Bremsscheibentopf, Anbindung des Bremsscheibentopfes und Übergang zum Außenreibpfad ergibt. Hierdurch soll zu dem Abfließen der Wärme aus dem Außenreibpfad in den Scheibentopf, der als Kühlkörper wirkt, und der damit einhergehenden Temperaturunterschiede zwischen der radialen Außenzone und der radialen Innenzone des Außenreibpfades ein Ausgleich geschaffen werden dahingehend, dass die Wärme des Außenreibpfades in die thermische Ausgleichsmasse strömt und somit die Temperaturunterschiede innerhalb des Außenreibpfades verringert werden.

Die DE 3 231 175 zeigt u.a. eine belüftete Bremsscheibe mit einer V-förmigen Vertiefung zwischen den beiden Reibpfaden. Um die beiden Reibpfade bei Bremsbetätigung auf einem vorgegebenen axialen Abstand zu halten, werden zwischen den Reibpfaden Stützstege oder flache Ringkörper angeordnet. Hierdurch soll der radial äußere Bereich der Reibpfade stärker erwärmt werden als der radial innere Bereich mit der Folge, dass der äußere Bereich sich stärker ausdehnt als der innere Bereich. Hierdurch soll eine Zugspannung entstehen, die für eine Straffung der Reibpfade in Radialrichtung sorgt und somit Verwerfungen der Bremsscheibe verhindert.

Aus WO 2004/102029 A ist ein Bremsband einer Scheibe für eine Scheibenbremse der belüfteten Art bekannt, wobei sich das Bremsband zwischen einem Innendurchmesser nahe einer Rotationsachse der Scheibe und einem Außendurchmesser, welcher von der Rotationsachse entfernt ist, erstreckt. Das Bremsband umfasst zwei Blätter, welche einen Zwischenraum definieren und durch als Pfosten ausgestaltete Verbindungsmittel verbunden sind, welche in drei konzentrischen Reihen mit einer Außenreihe nahe dem Außendurchmesser, einer Innenreihe nahe der Rotationsachse der Scheibe und einer Zwischenreihe zwischen der Außen- und Innenreihe gruppiert sind.

In US 5 460 249 A ist eine belüftete Rotorscheibe offenbart, welche eine äußere Scheibe und eine innere Scheibe umfasst, die Fläche-zu-Fläche nebeneinander liegen und integral mit einer Anzahl von Rippen ausgebildet sind, die radial zwischen den Scheiben angeordnet sind, wobei sich ein inneres Ende jeweils einer Rippe von Innenumfangsflächen der äußeren Scheiben und der inneren Scheibe in Richtung auf die Mitte der Scheiben erstreckt.

Der Erfindung liegt die Aufgabe zugrunde, eine Bremsscheibe und eine Scheibenbremse bereitzustellen, bei denen unerwünschte thermische und akustische Effekte weitgehend vermieden sind.

Hierzu stellt die Erfindung eine Bremsscheibe bereit für eine Scheibenbremse mit einem Außenreibpfad auf einer Seite und einem Innenreibpfad auf der anderen Seite der Bremsscheibe und mit luftdurchströmten Ausnehmungen zwischen den Reibpfaden zur Kühlung der Bremsscheibe, wobei die Ausnehmungen zumindest teilweise auf der Außenreibpfadseite eine andere Gestalt haben als auf der Innenreibpfadseite.

Bevorzugt besteht die Bremsscheibe aus einer den Innenreibpfad bildenden Teilplatte und einer weiteren, den Außenreibpfad bildenden Teilplatte. Die beiden Platten sind durch eine Vielzahl von säulenförmigen Abstützelmenten verbunden, zwischen denen dann Freiräume verbleiben, welche hier auch als Ausnehmungen bezeichnet sind. Der Erfindungsgedanke lässt sich mit diesen Begriffsbildungen auch so formulieren, dass die genannten Abstützelemente auf beiden Seiten der Bremsscheibe mit unterschiedlichen Formen in die genannten, die jeweiligen Reibpfade bildenden Platten übergehen. Diese Übergänge zwischen den Abstützelementen und den Platten werden so gestaltet, dass der Wärmeübergang von den die Reibpfade bildenden Platten in die Freiräume zwischen den Abstützelementen auf beiden Seiten der Bremsscheibe unterschiedlich ist, und zwar so, dass auf der Seite der Bremsscheibe, die sich ohne die besondere Ausgestaltung der genannten Übergänge zwischen den Abstützelementen und den Platten stärker erhitzen würde, der Wärmeabfluss größer ist als auf der anderen Seite der Bremse, sodass insgesamt eine möglichst homogene Temperaturverteilung in der Bremsscheibe erreicht wird und sich keiner der Reibpfade gegenüber dem anderen Reibpfad wesentlich stärker erhitzt.

Eine Möglichkeit, die genannten Übergänge zwischen den Abstützelementen und den die Reibpfade bildenden Platten im vorstehenden Sinne zu gestalten, besteht darin, die Krümmungsradien der Übergänge zwischen den Abstützelementen und den Platten auf der einen Seite der Bremsscheibe anders zu gestalten als auf der anderen Seite der Bremsscheibe. Größere Krümmungsradien bewirken einen größeren Wärmeübergang.

Der vorstehend erläuterte Erfindungsgedanke lässt sich auch anwenden auf Bremsscheiben, deren luftdurchströmte Ausnehmungen nicht durch Freiräume zwischen Abstützelementen gebildet werden sondern zum Beispiel durch luftdurchströmte spiralförmige Kanäle, radial verlaufende Hohlräume etc. Auch bei solchen Ausgestaltungen der Ausnehmungen kann durch die beschriebene asymmetrische Gestaltung der Wandgeometrie auf beiden Seiten der Bremsscheibe der gewünschte Effekt einer möglichst homogenen Temperaturverteilung in der Bremse erreicht werden.

Gemäß einer anderen Ausgestaltung der Erfindung wird die homogene Temperaturverteilung in der Bremsscheibe dadurch gefördert, dass die von Kühlluft durchströmten Ausnehmungen nicht genau mittig in der Bremsscheibe angeordnet sind, sondern mit axialem Versatz (bezogen auf die Achse der Bremsscheibe) derart, dass diejenige Seite der Bremsscheibe, die ohne diesen Versatz sich stärker erhitzen würde, im Ergebnis dieselbe oder eine möglichst ähnliche Temperatur hat wie die andere Seite der Bremsscheibe, auf der ohne den Versatz der Ausnehmungen eine stärkere Wärmeabfuhr gegeben wäre.

Der vorstehend beschriebene "Versatz" der Ausnehmungen in Bezug auf die Mittelebene der Bremsscheibe kann mit der erfindungsgemäßen unterschiedlichen Gestaltung der Übergangsbereiche zwischen den Abstützelementen und den Platten auf beiden Seiten der Bremse relativ gering gehalten werden, sodass die im Stand der Technik zu beklagenden Risiken hinsichtlich von Scheibenrissen bei unterschiedlichen Reibpfaddicken (also unterschiedlichen Stärken der genannten Platten) reduziert werden können.

Die Erfindung ermöglicht auch eine Kontrolle einer Rissbildung an einem der Reibpfade, insbesondere am Außenreibpfad einer Bremsscheibe derart, dass ein durch Rissbildung bedingtes Ende der Lebensdauer einer Bremsscheibe möglichst unkritisch und besonders einfach erkennbar ist. Hierzu werden die genannten Übergangsbereiche zwischen den Abstützelementen und den die Reibpfade bildenden Platten so gestaltet, dass die Rissbildung, wenn überhaupt, von oder nahe der radialen Mitte des Reibpfades ausgeht. Insbesondere können hierzu die Übergangsradien zwischen den Abstützelementen bzw. die Übergangsformen zwischen den Abstützelementen und den die Reibpfade bildenden Platten im radial inneren Bereich der Bremsscheibe anders gestaltet werden als in radial weiter außen liegenden Bereichen der Bremsscheibe. Dieser Aspekt der Erfindung, also die Steuerung der Erhitzung der Bremsscheibe so, dass die höchste Belastung der Bremsscheibe im radial mittleren Bereich der Reibpfade erfolgt und nicht im radial inneren Bereich der Reibpfade, kann auch für sich (als solche) unabhängig von den anderen Merkmalen der Erfindung realisiert werden.

Die Erfindung ermöglicht es, ohne signifikante Gewichtserhöhung die Wärmeverteilung in den Relbfaden und in der Bremsscheibe zu homogenisieren.

Dies bedeutet auch, dass die ungefederte Masse des Fahrzeuges angenähert konstant bleibt.

Bei Realisierung der Erfindung mit den oben erläuterten unterschiedlichen Krümmungsradien im Übergangsbereich zwischen den Abstützelementen und dem Reibpfaden kommt es wesentlich auf die Differenz der Reibradien auf beiden Seiten der Bremsscheibe an. Diese kann für eine gegebene Bremsscheibe mit bestimmten geometrischen Abmessungen empirisch optimiert werden. Der Begriff "Krümmungsradius" ist hier nicht notwendigerweise streng im Sinne eines Kreises zu verstehen. Abwandlungen von der Kreisform sind zugelassen. Das Wesentliche ist, dass die Krümmung im genannten Bereich auf der einen Seite der Bremsscheibe anders ist als auf der anderen Seite im oben beschriebenen Sinn, sodass der Wärmefluss vorm an sich thermisch höher belasteten Reibpfad in die Abstützelemente auf Grund der verbreiterten thermischen Brücke besser ist als auf der anderen Seite der Bremsscheibe, wo die Verbindung zwischen dem Reibpfad und dem Abstützelement eine thermische Brücke mit verringertem Querschnitt bildet, sodass diese Seite der Bremse, von welcher ohne die genannte Ausgestaltung der "thermischen Brücken" ein größerer Wärmefluss in den Bremsscheibentopf stattfindet, nunmehr im Wesentlichen die gleiche Temperatur erreicht wie die gegenüberliegende Seite der Bremsscheibe.

In Abwandlung der vorstehend beschriebenen Ausführungsbeispiele mit unterschiedlichen Krümmungsradien auf beiden Seiten der Mittelebene der Scheibenbremse ist es auch möglich, die beschriebenen technischen Wirkungen hinsichtlich der gewünschten Temperaturverteilung auch dadurch zu erzielen, dass die Übergangsbereiche zwischen den Abstützelementen und den die Reibpfade bildenden Platten unterschiedliche Abschrägungen aufweisen, derart, dass auf der stärker zu kühlenden Seite der Querschnitt im Übergangsbereich von der Reibpfadplatte in die Abstützelemente für die Wärmeleitung größer ist als auf der anderen Seite, sodass der Wärmeabfluss von dem Reibpfad auf der stärker zu kühlenden Seite relativ vergrößert ist. Die Form im Übergangsbereich der Abstützelemente in die Platten entspricht dann der Form der Ausnehmungen (Freiräume) und dort wird der genannte unterschiedliche Kühlungseffekt noch gefördert durch unterschiedliche Strömungsverhältnisse der Kühlluft auf den beiden Seiten der Bremsscheibe. Die Übergangsbereiche zwischen den Abstützelementen und den Platten können auch polygon ausgeführt werden. Entscheidend ist dabei auch, wie bei den obigen Ausführungsbeispielen, dass der Wärmeleitungsquerschnitt von demjenigen Reibpfad, der stärker zu kühlen ist, zu den luftgekühlten Flächen der Bremsscheibe den größeren Wärmeabfluss des anderen Reibpfades, von dem mehr Wärme durch die direkte Anbindung an den Bremstopf abfließt, kompensiert.

Mit den erfindungsgemäßen Maßnahmen gelingt es, sicherzustellen, dass die Bremsscheibe nicht mehr als 0,2 mm schirmt. Insbesondere gelingt es, diese Schirmung in Richtung des Bremskolbens (bei einer Schwimmsattel-Scheibenbremse) zu legen.

Die genannten Abstützelemente können unterschiedliche Formen annehmen, z. B. Säulenform (mit den beschriebenen Asymmetrien), Rippenform oder Konusform, wobei auf der einen Seite der Bremsscheibe ein größerer Konuswinkel vorgesehen ist als auf der anderen Seite und die Seite mit dem größeren Konuswinkel einen stärkeren Wärmeabfluss von ihrem Reibpfad hat.

Werden die Abstützelemente in der Art von Säulen oder Stiften ausgestaltet, können sie z. B. Durchmesser im Bereich von 3,5 bis 7 mm haben, bevorzugt im Bereicht von 4 bis 6 mm und besonders bevorzugt im Bereich vom 5mm. Die Abstützelemente sind z. B. gleichmäßig über die Bremsscheibe verteilt und haben untereinander z. B. einen typischen Abstand von Mitte zu Mitte im Bereich von 10 bis 30 mm. Bevorzugt wird die Bremsscheibe als Ganzes gegossen. Die oben beschriebene Variante der Erfindung, gemäß der zur Vermeidung einer Rissbildung im radial inneren Bereich der Reibpfade - wenn es überhaupt zu einer Rissbildung kommt - und zur Sicherstellung, dass eine solche Rissbildung im radial mittleren Bereich der Reibpfade beginnt, eine bestimmte Temperaturableitung aus den Reibpfaden derart vorgenommen wird, dass die Erhitzung bei extrem starken Bremsbefastungen im radial mittleren Bereich der Reibpfade dadurch realisiert wird, dass die Abstützelemente entsprechend inhomogen über die Bremsscheibe verteilt sind, also im radial mittleren Bereich der Reibbeläge zum Beispiel die Dichte der wärmeabführenden Abstützelemente geringer ist als weiter radial innen.

Nachfolgend werden Ausführungsbeispiele der Erfindung anhand der Zeichnungen näher erläutert. Es zeigt:
Fig. 1 einen Schnitt durch ein erstes Ausführungsbeispiel einer Bremsscheibe und
Fig. 2 einen Schnitt durch ein zweites Ausführungsbeispiel einer Bremsscheibe.

Die Figuren zeigen im Rahmen der Erfindung interessierende Teile einer Scheibenbremse, nämlich die Bremsscheibe. Die übrigen Komponenten der Scheibenbremse, wie der Bremsträger, der Bremssattel etc. können den verschiedenen Ausgestaltungen gemäß dem Stand der Technik entnommen werden.

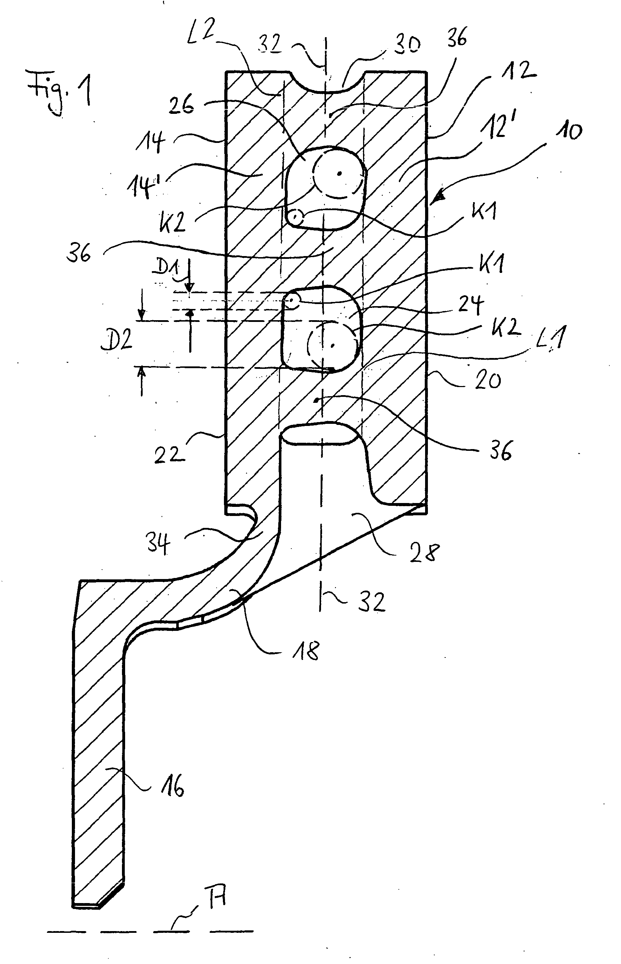

Von der Bremsscheibe 10 ist in Fig. 1 der Schnitt entlang einem Radius gezeigt. Die Bremsscheibe rotiert also um ihre Achse A.

Die Bremsscheibe 10 hat einen Innenreibpfad 12 und einen Außenreibpfad 14. Der Innenreibpfad 12 wird von einer (Innen-)Platte 12' gebildet und der Außenreibpfad 14 von einer (Außen-)Platte 14'. Die Bremsscheibe hat in an sich bekannter Weise einen Bremsscheibentopf 16, über den die Befestigung mit dem abzubremsenden Teil des Fahrzeuges erfolgt. Dies ist in der Regel die Radnabe. Bei Fahrzeugen, bei denen die Bremse am Differentialgetriebe angeordnet ist, ist die Bremsscheibe mit einem Teil des Achsantriebs verbunden.

Die belüftete Bremsscheihe 10 ist für eine Befestigung an einer Radnabe ausgebildet. Von dem Bremsscheibentopf 16 erstreckt sich schräg radial und axial eine Anbindung 18 zur Abstützung der Bremsscheibe 10. Die Anbindung 18 geht in einen Übergang 34 über, der einen reduzierten Querschnitt aufweist und einstückig in die Platte 14' des Außenreibpfades 14 mündet. In den Figuren ist also links "Außen" und rechts "Innen", jeweils bezogen auf den bestimmungsgemäßen Einbauzustand der Bremse im Fahrzeug.

Aufgrund der direkten Verbindung zwischen dem Bremsscheibentopf 16, welcher Wärme aufnimmt und abgibt, mit dem Außenreibpfad 14; erfolgt vom Außenreibpfad 14 ein stärkerer Wärmeabfluss in den Bremsscheibentopf 16 als von dem Innenreibpfad 12. Ohne besondere Maßnahmen würden deshalb der Innenreibpfad 12 und die ihn bildende Platte 12' sich stärker erhitzen als der Außenreibpfad 14 und die diesen bildende Platte 14'.

Die Reibpfade 12', 14' sind außen planparallel. Bezogen auf das Fahrzeug, in welches die Bremse eingebaut ist, handelt es sich also bei der Seite 20 der Bremsscheibe 10 um die Innenseite und bei der Seite 22 um die Außenseite der Bremsscheibe, d. h. die von der Fahrzeugmitte her gesehen nach außen gerichtete Seite der Bremsscheibe.

In der Bremsscheibe sind Ausnehmungen 24, 26 ausgebildet, die auch als Freiräume zwischen den Platten 12', 14' bezeichnet werden können. Die Ausnehmungen 24, 26 sind beim dargestellten Ausführungsbeispiel alle für eine freie Bewegung von Luft miteinander und untereinander verbunden. Dies deshalb, weil die Abstützelemente 36 stift- oder säulenförmig ausgestaltet sind, also nur stellenweise die Platten 12', 14' miteinander verbinden, sodass die Freiräume 24, 26 für eine freie Luftzirkulation entlang verschiedener Pfade verbunden sind. Die Luft strömt hier radial von innen nach außen, tritt also über einen Lufteinlass 28 zwischen die Platten 12', 14' und tritt über den Luftauslass 30 radial außen aus der Bremsscheibe aus, nachdem sie die Freiräume 24, 26 durchströmt und dabei Wärme aufgenommen hat. In Fig. 1 sind die beiden Platten 12', 14' durch die gedachten gestrichelten Linien L1 bzw. L2 markiert.

Beim Ausführungsbeispiel gemäß Fig. 1 stammt die Kühlluft, welche durch den Lufteinlass 28 in die Bremsscheibe eintritt, aus dem Bereich zwischen dem Fahrzeugrad und der Fahrzeugmitte. Wäre hingegen der Bremsscheibentopf an den Innenreibpfad 12 angebunden, käme die Kühlluft aus dem Bereich zwischen der Radfelge und dem Außenreibpfad 14. Das hätte eine weniger effektive Kühlung der Bremsscheibe zur Folge.

Wird die dargestellte Bremsscheibe 10 in eine Schimmsattel-Teilbelag-Scheibenbremse eingebaut, also eine Scheibenbremse, die nur auf einer Seite der Bremsscheibe eine Kolben-Zylinder-Anordnung hat, so ist die Kolben-Zylinder-Anordnung auf der Seite des Innenreibpfades 12 angeordnet.

Die beim Bremsen erzeugte Wärme entsteht zunächst am Außenreibpfad 14 und am Innenreibpfad 12. Von diesen Reibpfaden strömt die Wärme zu den Abstützelementen 36. Daneben strömt Wärme über den Übergang 34 und die Anbindung 18 in den Bremsscheibentopf 16 und von diesem in die Radnabe, wobei, wie gesagt, bei der dargestellten Ausführungsform die Wärmeströmung in den Bremsscheibentopf 16 mehr Wärme von den Außenreibpfad 14 abzieht als von dem Innenreibpfad 12.

Um gleichwohl zu erreichen, dass die Reibpfade zumindest angenährt gleiche Temperaturen haben, wird der Wärmeabfluss vom Außenreibpfad 14 in die Abstützelemente 36 und in die Freiräume 24, 26 gegenüber dem Wärmeabfluss vom Innenreibpfad 12 in die Abstützelemente 36 und die Freiräume 24, 26 gezielt so reduziert, dass der gewünschte Temperaturausgleich erfolgt. Dies geschieht dadurch, dass die Freiräume 24, 26 in Bezug auf eine Mittelebene 32 asymmetrisch gestaltet sind. Bei den in den Figuren dargestellten Ausführungsbeispielen haben die Freiräume unterschiedliche Krümmungsradien im Übergangsbereich zwischen den Abstützelementen 36 und den die Reibpfade bildenden Platten 12' bzw. 14'. In den Figuren sind gestrichelt Kreise eingezeichnet, die die jeweiligen Krümmungsradien in den genannten Übergangsbereichen schematisch darstellen. Bei säulenförmiger Gestaltung der Abstützelemente 36 sind die Übergangsbereiche rotationssymmetrisch um die Längsachsen der Abstützelemente (diese Längsachsen stehen senkrecht auf der Ebene 32).

Wie dargestellt ist, hat der Übergangsbereich eines Abstützelementes 36 in Richtung auf die Innenplatte 12' einen deutlich größeren Krümmungsradius, entsprechend dem Durchmesser D2 des gezeigten Kreises, als der Übergangsbereich des Abstützelementes auf der Außenseite in die Außenplatte 14'. Dadurch wird zweierlei in Bezug auf die gewünschte gezielte Beeinflussung der Wärmeströmung erreicht:

Erstens ist der für die Wärmeströmung im Metall der Bremsscheibe vom Reibpfad in das Abstützelement zur Verfügung stehende Strömungsquerschnitt auf der stärker zu kühlenden Seite, hier also der Seite des Innenreibpfades 12, größer als auf der anderen Seite, hier die Außenseite 22, der Bremsscheibe.

Zweitens wird die Strömung der Kühlluft in den Freiräumen 24, 26 so beeinflusst, dass auf der stärker zu kühlenden Seite der Bremsscheibe, hier also der Seite 20 des Innenreibpfades 12, durch den Luftstrom mehr Wärme aufgenommen wird als auf der anderen Seite der Bremsscheibe, beim vorliegenden Ausführungsbeispiel also auf der Seite 22 des Außenreibpfades 14. Die Kühlwirkung der Luftströmung lässt sich insbesondere dadurch in den Freiräumen 24, 26 auf beiden Seiten der Bremsscheibe asymmetrisch einstellen, dass Turbulenzen gezielt auf derjenigen Seite der Bremsscheibe entstehen, die stärker gekühlt werden muss als die andere Seite der Bremsscheibe, auf der dann bevorzugt eher die Strömung laminar ist.

Die beiden vorstehend genannten Effekte können sowohl einzeln als auch in Kombination eingesetzt werden, um insgesamt die gewünschte Temperaturverteilung auf und in der Bremsscheibe zu erreichen. Die Gestaltung der Konturen der Freiräume 24, 26 und die Gestaltung der Formen der Abstützelemente in Bezug auf die Übergangsbereiche in die Platten 12', 14' ist für eine gegebene Bremsscheibe mit bestimmten Abmessungen und Materialien im Rahmen vorgegebener Abschätzungen empirisch zu optimieren.

Zum Beispiel wurden für eine gegebene Bremsscheibe, deren Abmessungen weiter unten näher erläutert sind, Übergangsradien für die Seite des Außenreibpfades 14 zwischen 1 und 2,5 mm und Übergangsradien auf der anderen Seite, also auf der Seite des Innenreibpfades 12, im Bereich zwischen 3,5 und 6 mm als gut geeignet ermittelt. Diese Übergangsradien sind in den Figuren durch die gestrichelt gezeichneten Kreise angedeutet, die jeweils die Durchmesser D1 bzw. D2 haben.

Wie eingangs bereits erläutert ist, steht hier der Begriff "Übergangsradius" für nicht notwendig eine exakte Kreisform, sondern einen Kurvenverlauf, der auch von der genaueren Kreisform abweichen kann. Auch kann der Kurvenverlauf eckig, d.h. polygon sein. Wesentlich ist, dass mindestens einer der beiden oben genannten technischen Effekte, also hinsichtlich des Wärmeströmungsquerschnittes in den Abstützelementen und/oder hinsichtlich der Wärmeaufnahme in der Luftströmung erreicht wird.

Statt der gekrümmten Gestaltungen der in Rede stehenden Übergangsbereiche können auch abgeschrägte Formen, z. B. Konusformen vorgesehen werden. Zum Beispiel können die Übergangsbereiche der Abstützelemente in die Platten Abschrägungen in Bezug auf die Ebene 32 aufweisen, geometrisch vergleichbar etwa einer Fase, die an den Freiräumen angebracht wird, wobei dann - analog dem Verhältnis der oben beschriebenen Krümmungsradien - auf der stärker zu kühlenden Seite der Bremsscheibe der Querschnitt im Abstützelement 36 zum Zwecke erhöhter Wärmeströmung größer gestaltet ist.

Statt der oben beschriebenen säulenförmigen Ausgestaltungen der Abstützelemente 36 können diese auch als kurze Rippen oder dergleichen geformt sein, wobei dann entsprechende Asymmetrien auf beiden Seiten der Ebene 32 zur Erzielung der oben genannten Effekte vorgesehen sind.

Da die Bremsscheibe 10 beim dargestellten Ausführungsbeispiel gegossen wird und die Freiräume 24, 26 für die Belüftung aufweist, verläuft die Gusskern-Trennebene typischerweise durch die Abstützelemente 36. Dies erleichtert eine Ausführungsform, die oben bereits angedeutet ist, mit zwei Doppelkonussen derart, dass sich von der Trennebene ein Konus aufweitendend zum Innenreibpfad 12 und der andere Konus sich aufweitendend zu dem Außenreibpfad erstreckt. Durch Wahl der Konuswinkel kann der Wärmefluss im obigen Sinn gesteuert werden.

Ein weiteres Mittel der Steuerung des Wärmeflusses ist die Gestaltung der Anbindung 18 und des Übergangs 34 sowie der Bremsscheibe im Bereich des Lufteinlasses 28. So kann zum Beispiel der ursprünglich tragende Querschnitt der Anbindung 18 teilweise oder auch vollständig mittels Rippen 28 ersetzt werden, wobei zum Erreichen der Wärmetiusssteuerung dann der Übergang 34 sowohl in Querschnittsdicke als auch hinsichtlich seiner Länge angepasst wird. Es können auch Löcher im Übergangsbereich 18 zur Reduzierung des Wärmeflusses vorgesehen werden. Insgesamt muss für eine gegebene Struktur einer Bremsscheibe das Wechselspiel der einzelnen Wärmeströmungen zur Erreichung des oben genannten Zieles der optimalen Wärmeverteilung auf und in der Bremsscheibe angepasst werden.

Ein anderes Ziel bei der Konstruktion fortschrittlicher Bremsscheiben besteht darin, das Ende der Lebensdauer einer Bremsscheibe für Fachpersonal leicht erkennbar werden zu lassen. Das Ende der Lebensdauer einer Bremsscheibe wird in der Regel durch Rissbildung angezeigt. Von Vorteil ist es in diesem Sinne, die Wärmeverhältnisse und Spannungsverhältnisse in der Bremsscheibe so zu gestalten, dass die Rissbildung gegen Ende der Lebensdauer der Bremsscheibe auf dem Außenreibpfad erkennbar wird (weil dieser leichter wahrnehmbar ist). Kritisch sind insbesondere Rissbildungen im radial inneren Bereich der Bremsscheibe 10, weil dies die Gefahr birgt, dass die Bremsscheibe birst (reisst). Wünschenswert ist es deshalb, die Bremsscheibe, insbesondere wie oben auf Seite 8, 1. Absatz beschrieben, so zu gestalten, dass gegen Ende der Lebensdauer zuerst Rissbildungen, wenn überhaupt, etwa in der Mitte des Außenreibpfades auftreten. Um dies zu erreichen, ist gemäß einer besonderen Ausgestaltung der Bremsscheibe vorgesehen, dass der mittlere Bereich der Scheibe höheren Temperaturwechselspannungen ausgesetzt wird als andere, radial weiter innen oder außen liegende Bereiche. Hierzu können im mittleren radialen Bereich der Reibpfade die Wärmeleitungsquerschnitte (entsprechend also die Übergangsradien) so gestaltet werden, dass in diesem mittleren Bereich der Wärmeübergang von dem Außenreibpfad etwas reduziert ist. Derselbe Effekt kann auch dadurch erreicht werden, dass die Dichte der Abstützelemente 36 im radial mittleren Bereich der Reibpfade etwas reduziert wird.

Folgende geometrische Abmessung haben sich für eine Bremsscheibe der vorstehend beschriebenen Art als günstig erwiesen:

Bei einer Bremsscheibe im Durchmesserbereich von 300 bis 360 mm liegen die Abstützelemente auf drei Kreisen (entsprechend Fig. 1). Die Anzahl der Abstützelemente 36, insbesondere auf dem äußeren Kreis wird so gewählt, dass die Schwingungsmoden der Bremsscheibe möglichst weit entfernt sind von Eigenfrequenzen anderer Komponenten der Scheibenbremse, in welche die Bremsscheibe eingebaut wird. Bei einer Bremsscheibe mit z. B. 320 mm Durchmesser, die für eine 16 Zoll-Radfelge vorgesehen ist, befinden sich im äußeren Kreis etwa 50 Abstützelemente 36, im mittleren Kreis etwa 45 Abstützelemente und im inneren Kreis etwa 35 bis 45 Abstützelemente.

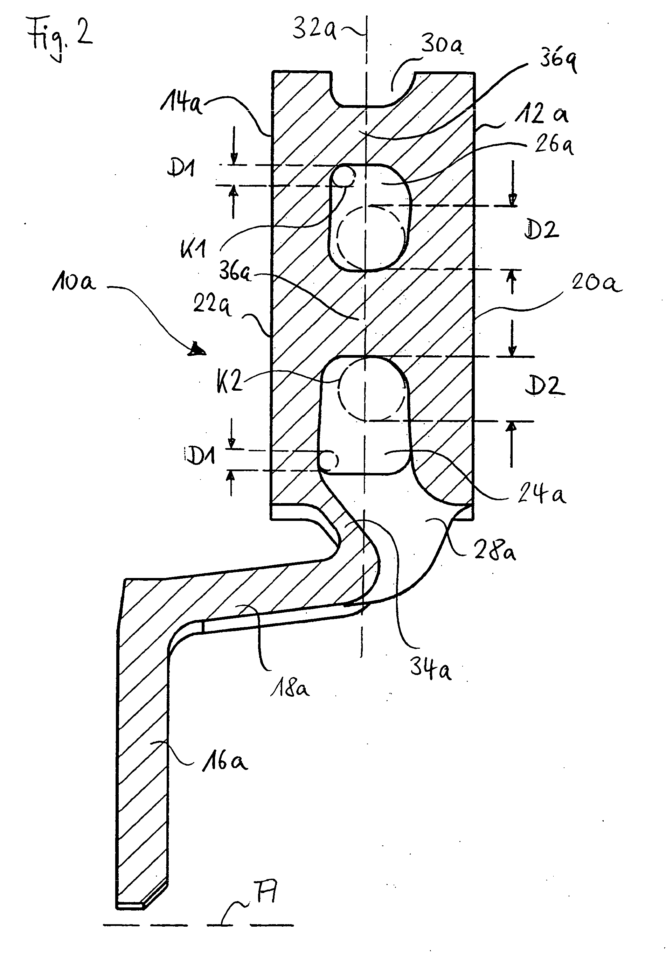

Fig. 2 zeigt eine abgeänderte Bremsscheibe mit einem sogenannten Schwanenhals 34a. Ansonsten sind in den Figuren einander funktionsgleiche oder funktionsähnliche Bauteile mit gleichen Bezugszahlen versehen, in Fig. 2 ergänzt durch ein "a".

### Bezugszeichenliste

- 12: 10 Bremsscheibe Innenreibpfad
- 12': Platte
- 14: Außenreibpfad
- 14': Platte
- 16: Bremsscheibentopf
- 18: Anbindung (von 10 an 16)
- 20: Innenseite
- 22: Außenseite
- 24: Ausnehmung
- 26: Ausnehmung
- 28: Lufteinlass
- 30: Luftauslass
- 32: Ebene
- 34: Übergang (von 18 zu 14)
- 36: Abstützelement
- A: Achse
- K1: Kreis
- K2: Kreis
- D1: Radius
- D2: Radius
- L1: Linie
- L2: Line

## Patentansprüche

1. Bremsscheibe für eine Scheibenbremse mit einem Außenreibpfad (14; 14a) auf einer Seite und einem Innenreibpfad (12; 12a) auf der anderen Seite der Bremsscheibe und mit luftdurchströmten Ausnehmungen (24, 26; 24a, 26a) zwischen den Reibpfaden zur Kühlung der Bremsscheibe (10), mit einer Platte (14'), die den Außenreibpfad (14) bildet, und einer Platte (12'), die den Innenreibpfad (12) bildet, wobei eine der Platten mit einem Wärme abführenden Bremsscheibentopf (16) verbunden ist und die beiden Platten (12', 14') durch Abstützelemente (36) verbunden sind,
**dadurch gekennzeichnet, dass**
auf Seiten der nicht mit dem Bremsscheibentopf (16) verbundenen Platte (12') der Querschnitt (10, 36) im Übergangsbereich von der Platte (12') in die Abstützelemente (36) für Wärmeleitung größer ist als auf Seiten der mit dem Bremsscheibentopf (16) verbundenen Platte (14').

2. Bremsscheibe nach Anspruch 1, **dadurch gekennzeichnet, dass** die Ausnehmungen (24, 26; 24a, 26a) asymmetrisch sind in Bezug auf eine Ebene (32; 32a), die etwa mittig durch die Ausnehmung und parallel zu den Reibpfaden (12, 14; 12a, 14a) verläuft.

3. Bremsscheibe nach einem der Ansprüche 1 oder 2, **dadurch gekennzeichnet, dass** die Ausnehmungen (24, 26; 24a, 26a) auf der Seite der Bremsscheibe, auf der die Platte mit einem Bremsscheibentopf (16) verbunden ist, kleinere Krümmungsradien haben als auf der anderen Seite der Bremsscheibe.

4. Bremsscheibe nach Anspruch 1, **dadurch gekennzeichnet, dass** die Ausnehmungen sich um die zentrale Achse der Bremsscheibe herum erstrecken und radial über den gesamten Raum zwischen Außenreibpfad und Innenreibpfad verteilt angeordnet sind.

5. Bremsscheibe nach Anspruch 1, **dadurch gekennzeichnet, dass** die Ausnehmungen sich spiralförmig durch die Bremsscheibe winden.

6. Bremsscheibe nach einem der Ansprüche 1 bis 5, **dadurch gekennzeichnet, dass** die erste und die zweite Platte (12', 14') zumindest annähernd gleiche Stärke haben und die Wärmeabfuhr von einer Seite der Bremsscheibe außer durch die Wirkung der Ausnehmungen größer ist als auf der anderen Seite der Bremsscheibe, wobei die Ausnehmungen (24, 26; 24a, 26a) näher an der Seite der Bremsscheibe angeordnet sind, auf der die Wärmeabfuhr von dem Reibpfad außer durch die Wirkung der Ausnehmungen geringer ist.

7. Bremsscheibe nach einem der Ansprüche 1 bis 6, **dadurch gekennzeichnet, dass** die Anzahl der Abstützelemente (36; 36a) so gewählt wird, dass die Eigenfrequenz der Bremsscheibe (10) deutlich verschieden ist von den Eigenfrequenzen anderer Komponenten der Scheibenbremse.

8. Bremsscheibe nach einem der Ansprüche 1, 6 oder 7, **dadurch gekennzeichnet, dass** die Bremsscheibe (10; 10a) außenseitig oder mittig am Bremstopf (16; 16a) angebunden ist.

9. Bremsscheibe nach einem der Ansprüche 1, 6 oder 7, **dadurch gekennzeichnet, dass** die Bremsscheibe von der Fahrzeugmitte her belüftet ist.

10. Bremsscheibe nach einem der Ansprüche 1, 6 oder 7 mit Abstützelementen (36; 36a) zwischen den Ausnehmungen (24, 26; 24a, 26a), **dadurch gekennzeichnet, dass** die Abstützelemente auf gegenüberliegenden Seiten einer Ebene (32; 32a), die im Wesentlichen senkrecht verläuft zur Achse (A) der Bremsscheibe, mit unterschiedlichen Formen in Richtung auf die Reibpfade auslaufen.

11. Bremsscheibe nach Anspruch 3, **dadurch gekennzeichnet, dass** die Krümmungsradien der Ausnehmungen auf der Seite des äußeren Reibpfades (14; 14a) überwiegend im Bereich von 1 bis 2,5 mm liegen und die Krümmungsradien der Ausnehmungen auf der Seite des Innenreibpfades (12; 12a) überwiegend im Bereich von 3 bis 6 mm liegen.

12. Bremsscheibe nach einem der Ansprüche 1 oder 6, **dadurch gekennzeichnet, dass** die Anbindung (18; 18a) des einen Reibpfades (14; 14a) an den Bremsscheibentopf (16) oder an einen Schwanenhals (34a) des Bremsscheibentopfes (16a) im Querschnitt reduziert und/oder gelocht ist.

13. Scheibenbremse, insbesondere eine Schwimmsattel-Scheibenbremse, mit einer Bremsscheibe gemäß einem der Ansprüche 1, 6 oder 7.

14. Bremsscheibe nach einem der Ansprüche 1, 6 oder 7, **dadurch gekennzeichnet, dass** die Ausnehmungen in einem radial mittleren Bereich der Reibpfade so gestaltet sind, dass in diesem mittleren Bereich der Wärmeabfluss von dem Außenreibpfad (14; 14a) geringfügig so weit relativ zum Wärmeabfluss von dem Innenreibpfad (12; 12a) reduziert ist, dass ein eventueller Riss nach starkem Verschleiß der Bremsscheibe außenseitig in dem radial mittleren Bereich des Reibpfades ansetzt.

15. Bremsscheibe nach einem der Ansprüche 1 bis 12 oder 14 **dadurch gekennzeichnet, dass** die Übergangsradien zwischen den Abstützelementen (36; 36a) bzw. die Übergangsformen zwischen den Abstützelementen (36; 36a) und den die Reibpfade (12; 12a; 14; 14a) bildenden Platten (12; 12a; 14; 14a) im radial inneren Bereich der Bremsscheibe anders gestaltet werden als in radial weiter außen liegenden Bereichen der Bremsscheibe, so dass in einem radial mittleren Bereich die Temperaturwechselspannungen aus dem Außenreibpfad (14; 14a) der Bremsscheibe im Vergleich zu den Temperaturwechselspannungen aus dem Innenreibpfad (12; 12a) der Bremsscheibe so weit unterschiedlich sind, dass eine eventuelle Rissbildung nach starkem Bremsscheibenverschleiß zuerst in einem radial mittleren Bereich des Außenreibpfades (14; 14a) einsetzt.

## Claims

1. Brake disc for a disc brake having an outer friction path (14; 14a) on one side and an inner friction path (12; 12a) on the other side of the brake disc and having air-swept hollows (24, 26; 24a, 26a) between the friction paths for cooling the brake disc (10), having a plate (14'), which forms the outer friction path (14), and a plate (12'), which forms the inner friction path (12), wherein one of the plates is connected to a heat-removing brake disc pot (16) and the two plates (12', 14') are connected by supporting elements (36),
**characterized in that**
on the side of the plate (12') that is not connected to the brake disc pot (16) the cross section in the transition region from the plate (12') into the supporting elements (36) for heat conduction is greater than on the side of the plate (14') that is connected to the brake disc pot (16).

2. Brake disc according to claim 1, **characterized in that** the hollows (24, 26; 24a, 26a) are asymmetrical in relation to a plane (32; 32a), which extends approximately centrally through the hollow and parallel to the friction paths (12, 14; 12a, 14a).

3. Brake disc according to one of claims 1 or 2, **characterized in that** the hollows (24, 26; 24a, 26a) on the side of the brake disc, on which the plate is connected to the brake disc pot (16), have smaller radii of curvature than on the other side of the brake disc.

4. Brake disc according to claim 1, **characterized in that** the hollows extend around the central axis of the brake disc and are disposed distributed radially over the entire space between outer friction path and inner friction path.

5. Brake disc according to claim 1, **characterized in that** the hollows wind spirally through the brake disc.

6. Brake disc according to one of the claims 1 to 5 , **characterized in that** the first and the second plate (12', 14') have at least approximately the same thickness and the heat removal from one side of the brake disc apart from by means of the effect of the hollows is greater than on the other side of the brake disc, **characterized in that** the hollows (24, 26; 24a, 26a) are disposed closer to the side of the brake disc, on which the heat removal from the friction path apart from by means of the effect of the hollows is lower.

7. Brake disc according to one of claims 1 or 6, **characterized in that** the number of the supporting elements (36; 36a) are configured in such a way that the natural frequency of the brake disc (10) varies markedly from the natural frequencies of other components of the brake disc.

8. Brake disc according to one of claims 1, 6 or 7, **characterized in that** the brake disc (10; 10a) is connected at the outside or centrally to the brake pot (16; 16a).

9. Brake disc according to one of claims 1, 6 or 7, **characterized in that** the brake disc is ventilated from the direction of the vehicle centre.

10. Brake disc according to one of claims 1, 6 or 7 having supporting elements (36; 36a) between the hollows (24, 26; 24a, 26a), **characterized in that** the supporting elements on opposite sides of a plane (32; 32a), which extends substantially perpendicular to the axis (A) of the brake disc, run out with different shapes in the direction of the friction paths.

11. Brake disc according to claim 3, **characterized in that** the radii of curvature of the hollows on the side of the outer friction path (14; 14a) are predominantly in the region of 1 to 2.5 mm and the radii of curvature of the hollows on the side of the inner friction path (12; 12a) are predominantly in the region of 3 to 6 mm.

12. Brake disc according to one of claims 1 or 6, **characterized in that** the connection (18; 18a) of the one friction path (14; 14a) to the brake disc pot (16) or to a swan neck (34a) of the brake disc pot (16a) is reduced in cross section and/or perforated.

13. Disc brake, in particular a floating-caliper disc brake, having a brake disc according to one of claims 1, 6 or 7.

14. Brake disc according to one of claims 1, 6 or 7, **characterized in that** the hollows in a radially central region of the friction paths are configured in such a way that in said central region the heat removal from the outer friction path (14; 14a) is slightly reduced to such an extent relative to the heat removal from the inner friction path (12; 12a) that any crack after extreme wear of the brake disc starts at the outside in the radially central region of the friction path.

15. Brake disc according to one of the claims 1 to 12 or 14, **characterized in that** the radii of transition between the supporting elements (36; 36a) or the shapes of transition between the supporting elements (36; 36a) and the plates (12; 12a; 14; 14a) forming the friction paths (12; 12a; 14; 14a) in the radial inner area of the brake disc are different from the shapes in the radial outer areas of the brake disc such that the differences of temperature caused tensions from the outer friction path (14; 14a) of the brake disc compared to the thermal tension from the inner friction path (12; 12a) of the brake disc differs to such an extend that any crack formation after extreme brake disc wear starts first in a radially central region of the outer friction path (14; 14a).

## Revendications

1. Disque de frein pour frein à disque, comportant, sur un côté, une piste de friction extérieure (14 ; 14a) et, sur l'autre côté, une piste de friction intérieure (12 ; 12a) ainsi que, entre les pistes de friction, des évidements (24, 26 ; 24a, 26a) traversés par un courant d'air pour permettre le refroidissement du disque de frein (10), et comportant une plaque (14') formant la piste de friction extérieure (14) et une plaque (12') formant la piste de friction intérieure (12), une des plaques étant reliée à une cloche de disque de frein (16) qui évacue la chaleur et les deux plaques (12', 14') étant reliées par des éléments de soutien (36),
**caractérisé en ce que**
sur le côté de la plaque (12') non reliée à la cloche de disque de frein (16), la section (10, 36) dans la zone de transition comprise entre la plaque (12') et les éléments de soutien (36) est plus grande que sur le côté de la plaque (14') reliée à la cloche de disque de frein (16), pour l'évacuation de la chaleur.

2. Disque de frein selon la revendication 1, **caractérisé en ce que** les évidements (24, 26 ; 24a, 26a) sont asymétriques par rapport à un plan (32 ; 32a) qui passe sensiblement par le centre de l'évidement et parallèlement aux pistes de friction (12, 14 ; 12a, 14a).

3. Disque de frein selon l'une des revendications 1 ou 2, **caractérisé en ce que** les évidements (24, 26 ; 24a, 26a) possèdent, sur le côté du disque de frein sur lequel la plaque est reliée à une cloche de disque de frein (16), des rayons de courbure plus petits que sur l'autre côté du disque de frein.

4. Disque de frein selon la revendication 1, **caractérisé en ce que** les évidements s'étendent autour de l'axe central du disque de frein et sont disposés radialement répartis dans tout l'espace compris entre la piste de friction extérieure et la piste de friction intérieure.

5. Disque de frein selon la revendication 1, **caractérisé en ce que** les évidements traversent sous forme d'hélice le disque de frein.

6. Disque de frein selon l'une des revendications 1 à 5, **caractérisé en ce que** la première et la deuxième plaque (12', 14') possèdent au moins approximativement la même épaisseur et l'évacuation de la chaleur est, excepté l'effet produit par les évidements, plus grande d'un côté que de l'autre côté du disque de frein, les évidements (24, 26 ; 24a, 26a) étant disposés plus près du côté du disque de frein sur lequel l'évacuation de la chaleur de la piste de friction est plus faible, excepté l'effet produit par les évidements.

7. Disque de frein selon l'une des revendications 1 à 6, **caractérisé en ce que** le nombre des éléments de soutien (36 ; 36a) est choisi de manière à ce que la fréquence propre du disque de frein (10) est sensiblement différente des fréquences propres des autres composants du frein à disque.

8. Disque de frein selon l'une des revendications 1, 6 ou 7, **caractérisé en ce que** le disque de frein (10 ; 10a) est relié extérieurement ou au milieu à la cloche de frein (16 ; 16a).

9. Disque de frein selon l'une des revendications 1, 6 ou 7, **caractérisé en ce que** le disque de frein est ventilé depuis le milieu du véhicule.

10. Disque de frein selon l'une des revendications 1, 6 ou 7, comportant des éléments de soutien (36 ; 36a) entre les évidements (24, 26 ; 24a, 26a) **caractérisé en ce que** les éléments de soutien prennent, sur des côtés opposés d'un plan (32 ; 32a) s'étendant pour l'essentiel perpendiculairement à l'axe (A) du disque de frein, des formes différentes en direction des pistes de friction.

11. Disque de frein selon la revendication 3, **caractérisé en ce que** les rayons de courbure des évidements sont, sur le côté de la piste de friction extérieure (14 ; 14a), compris essentiellement entre 1 et 2,5 mm, et ceux des évidements sur le côté de la piste de friction intérieure (12 ; 12a), entre 3 et 6 mm.

12. Disque de frein selon l'une des revendications 1 ou 6, **caractérisé en ce que** la liaison (18 ; 18a) entre une des pistes de friction (14 ; 14a) et la cloche de disque de frein (16) ou un col de cygne (34a) de la cloche de disque de frein (16a) est de section réduite et/ou perforée.

13. Frein à disque, en particulier un frein à disque à étrier flottant, comportant un disque de frein conformément à l'une des revendications 1, 6 ou 7.

14. Disque de frein selon l'une des revendications 1, 6 ou 7, **caractérisé en ce que** les évidements sont, dans une zone radialement médiane des pistes de friction, conçus de manière à ce que l'écoulement de la chaleur de la piste de friction extérieure (14 ; 14a) est, dans ladite zone médiane, légèrement réduit par rapport à l'écoulement de la chaleur de la piste de friction intérieure (12 ; 12a) de telle sorte qu'il y a formation éventuelle d'une fissure sur le côté extérieur, dans la zone radialement médiane de la piste de friction, suite à une forte usure du disque de frein.

15. Disque de frein selon l'une des revendications 1 à 12 ou 14, **caractérisé en ce que** les rayons de transition entre les éléments de soutien (36 ; 36a) ou les formes de transition entre les éléments de soutien (36 ; 36a) et les plaques (12 ; 12a ; 14 ; 14a) formant les pistes de friction (12 ; 12a ; 14 ; 14a) sont, dans la zone radialement intérieure du disque de frein, conçus autrement que dans les zones situées radialement plus à l'extérieur du disque de frein, si bien que les contraintes résultant des variations de température dans la piste de friction extérieure (14 ; 14a) du disque de frein sont, dans une zone radialement médiane, si différentes par comparaison aux contraintes résultant des variations de température dans la piste de friction intérieure (12 ; 12a) du disque de frein qu'il y a formation éventuelle d'une fissure tout d'abord dans une zone radialement médiane de la piste de friction extérieure (14 ; 14a), suite à une forte usure du disque de frein.
